(19) Europäisches Patentamt
European Patent Office
Office européen des brevets

(11) **EP 3 610 283 B1**

(12) **FASCICULE DE BREVET EUROPEEN**

(45) Date de publication et mention
de la délivrance du brevet:
**05.05.2021 Bulletin 2021/18**

(51) Int Cl.:
***G01S 5/06*** *(2006.01)*

(21) Numéro de dépôt: **18724950.3**

(22) Date de dépôt: **10.04.2018**

(86) Numéro de dépôt international:
**PCT/FR2018/050900**

(87) Numéro de publication internationale:
**WO 2018/189477 (18.10.2018 Gazette 2018/42)**

(54) **PROCEDE, DISPOSITIF ET PRODUIT PROGRAMME D'ORDINATEUR POUR LA GEOLOCALISATION D'UN EMETTEUR RADIO**

VERFAHREN, VORRICHTUNG UND COMPUTERPROGRAMMPRODUKT ZUR GEOPOSITIONIERUNG EINES FUNKSENDERS

METHOD, DEVICE AND COMPUTER PROGRAM PRODUCT FOR THE GEOPOSITIONING OF A RADIO TRANSMITTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.04.2017 FR 1753177**

(43) Date de publication de la demande:
**19.02.2020 Bulletin 2020/08**

(73) Titulaire: **Kerlink**
**35235 Thorigne-Fouillard (FR)**

(72) Inventeur: **ROUSSELOT, Florent**
**35235 Thorigné-Fouillard (FR)**

(74) Mandataire: **Loyer & Abello**
**9, rue Anatole de la Forge**
**75017 Paris (FR)**

(56) Documents cités:
**US-A- 5 058 200        US-A1- 2003 146 871**
**US-A1- 2010 138 184**

## Description

## Domaine technique

L'invention se rapporte au domaine des procédés de géolocalisation d'un dispositif émetteur de signal radio, notamment des dispositifs émetteurs de signaux appartenant au domaine de l'Internet des objets. Plus particulièrement, l'invention se rapporte à la géolocalisation d'un dispositif émetteur de signal dans le cadre d'un réseau étendu à longue portée comportant une pluralité de passerelles de concentration de données.

## Arrière-plan technologique

L'internet des objets consiste à permettre à des objets de communiquer automatiquement des données avec un réseau sans-fil. Par exemple, un compteur d'eau équipé d'un module de communication peut automatiquement communiquer un relevé d'eau à l'entreprise de gestion de la facturation de la consommation d'eau.

Des passerelles de concentration des messages, également appelées stations, ont pour rôle d'assurer la réception et l'émission de données en provenance et à destination des modules de communication présents dans leur zone de couverture ainsi que de relayer ces données à des équipements en charge de les traiter, par exemple des serveurs accessibles sur un réseau basé sur le protocole IP (« Internet Protocol »).

Plusieurs technologies d'accès radio sont disponibles pour la mise en œuvre de réseaux de modules de communication. On peut citer à titre purement illustratif et non limitatif les technologies LoRa™, Sigfox™ ou encore WM-Bus (de l'anglais « *Wireless Meter Bus* »), qui reposent notamment sur des types de modulation différents. Ces technologies ont en commun de proposer des communications longue distance (dites « *long range* » en anglais) qui permettent de diminuer le nombre de passerelles en augmentant la couverture de celles-ci.

Dans certaines situations, il peut être nécessaire de géolocaliser certains objets émetteurs de signaux radios. Cela peut par exemple être le cas pour des émetteurs associés à des objets mobiles tels que des palettes de transport de produits ou autre. Il est connu d'utiliser pour cela un guidage pas satellite (GPS). Cependant, l'utilisation de composants permettant la localisation via des données GPS peut être complexe, coûteuse et consommatrice d'énergie pour le dispositif émetteur de signal et n'est donc pas adaptée à toutes les utilisations ni à tous les dispositifs émetteurs de signaux.

Le document US5058200 A décrit un système de géolocalisation de dispositif émetteur. Le document US2003/146871 A1 décrit un système de géolocalisation utilisant la direction la différence entre les temps d'arrivée.

Il est également connu, par exemple du document US2010/0138184 A1 un procédé de géolocalisation par triangulation à l'aide de données de réception d'un signal émis par un dispositif émetteur de signal au niveau d'une pluralité de récepteurs radio. De telles données de réception sont par exemple la date de réception du signal ou encore la puissance du signal radio reçu par les différents récepteurs. Cependant, une telle méthode par triangulation présente une précision limitée et ne permet pas de géolocaliser le dispositif émetteur de signal avec une fiabilité satisfaisante.

Il existe donc un besoin pour un procédé de géolocalisation d'un dispositif émetteur de signal radio présentant une faible complexité, une consommation réduite et une bonne fiabilité.

## Résumé

L'invention permet de répondre à ces besoins. Une idée à la base de l'invention est de permettre la géolocalisation d'un dispositif émetteur de signal radio sans augmentation de la consommation énergétique dudit dispositif émetteur de signal radio. Une idée à la base de l'invention est de permettre la géolocalisation d'un dispositif émetteur de signal radio sans augmenter la complexité dudit dispositif émetteur de signal radio. Une idée à la base de l'invention est de permettre une géolocalisation d'un dispositif émetteur de signal radio avec un degré de précision satisfaisant. Une idée à la base de l'invention est de géolocaliser un dispositif émetteur de signal radio à l'aide d'une infrastructure d'un réseau de communication communiquant avec ledit dispositif émetteur de signal radio. Une idée à la base de l'invention est de permettre une géolocalisation d'un dispositif émetteur de signal radio avec une fiabilité satisfaisante.

Pour cela, l'invention fournit un procédé de géolocalisation d'un dispositif émetteur de signal, ledit dispositif émetteur de signal émettant un signal radio, le procédé de géolocalisation comportant :

    a. fournir des positions d'une pluralité de stations de réception d'un réseau de communication radio et des dates de réception du signal radio par lesdites stations de réception,
    b. sélectionner une station de référence parmi la pluralité de stations de réception,
    c. définir une zone de balayage en fonction desdites positions des stations de réception,
    d. subdiviser la zone de balayage en une pluralité de sous-zones en fonction d'une granularité de balayage,
    e. pour chaque sous-zone, calculer un degré d'erreur cumulée de ladite sous-zone, le calcul du degré d'erreur cumulée de ladite sous-zone comportant :

        o déterminer une position testée comprise dans ladite sous-zone,
        o calculer pour chaque station de réception un paramètre d'erreur de transmission respectif en fonction d'une date de réception du signal radio par ladite station de réception, d'une date de réception du signal radio par la station de référence, d'une vitesse de propagation du signal radio, d'une distance entre la position testée et ladite station de réception et d'une distance entre la position testée et la station de référence, o calculer le degré d'erreur cumulée de la sous-zone en fonction des paramètres d'erreur de transmission calculés pour l'ensemble des stations de réception,

f. sélectionner une sous-zone présentant un degré d'erreur cumulé minimal comme sous-zone de localisation du dispositif émetteur de signal
g. définir une nouvelle zone de balayage, la nouvelle zone de balayage incluant et étant centrée sur la sous-zone de localisation sélectionnée à l'étape f),
h. définir une nouvelle granularité de balayage inférieure à la granularité de balayage,
i. itérer le procédé à partir de l'étape d) avec la nouvelle zone de balayage en tant que zone de balayage et la nouvelle granularité en tant que granularité,

et dans lequel à chaque itération la nouvelle zone de balayage est définie à l'étape h) comme égale à la sous-zone de localisation sélectionnée à l'étape f) augmentée d'une marge entourant complètement la sous-zone de localisation et dont la largeur est supérieure à la granularité de balayage.

Grâce à un tel procédé, il est possible d'obtenir une géolocalisation du dispositif émetteur de signal radio sans nécessiter de modification du dispositif émetteur de signal. En particulier, le procédé selon l'invention permet de géolocaliser un dispositif émetteur de signal radio sans en augmenter la complexité ni la consommation énergétique. En outre, le procédé selon l'invention permet grâce aux itérations successives de géolocaliser le dispositif émetteur de signal avec une bonne précision de géolocalisation.

Selon d'autres modes de réalisation avantageux, un tel procédé de géolocalisation peut présenter une ou plusieurs des caractéristiques suivantes.

Selon un mode de réalisation, définir la zone de balayage comporte déterminer une longitude maximale des stations de réception, une longitude minimale des stations de réception, une latitude maximale des stations de réception, une latitude minimale des stations de réception, la zone de balayage étant délimitée par lesdites longitudes et latitudes maximales et minimales. Selon un mode de réalisation, définir la zone de balayage comporte en outre ajouter une marge à la zone de balayage délimitée par les longitudes et latitudes maximales et minimales des stations de réception.

Selon un mode de réalisation, le procédé comporte un nombre d'itérations supérieur à 3, par exemple égal à 7. Grâce à ces caractéristiques, il est possible d'obtenir une géolocalisation avec degré de précision satisfaisant.

Selon un mode de réalisation, l'étape de calcul du paramètre d'erreur de transmission d'une station de réception répond à la formule :

$$E_i^{k,l} = \left| d_i^{k,l} - d_0^{k,l} \right| - \left| ((T_i - T_0) * C) \right|$$

Dans lequel $E_i^{k,l}$ est le paramètre d'erreur de la station de réception à la position testée, $d_i^{k,l}$ est la distance entre la position testée et la station de réception, $d_0^{k,l}$ est la distance entre la position testée et la station de référence, $T_i$ est la date de réception du signal radio par la station de réception, $T_0$ est la date de réception du signal radio par la station de référence, et C est la vitesse de propagation du signal radio émis par le dispositif émetteur de signal.

Selon un mode de réalisation, le degré d'erreur cumulée d'une sous-zone est la somme des paramètres d'erreur de transmission de la pluralité de stations de réception pour ladite sous-zone.

Selon un mode de réalisation, le procédé comporte en outre déterminer un seuil de qualité de signal et ne pas tenir compte du signal radio reçu par les stations de réception dont la qualité de réception du signal radio est inférieur au seuil de qualité de signal déterminé. Grâce à ces caractéristiques, la fiabilité du procédé de géolocalisation est satisfaisante. En particulier, il est ainsi possible d'écarter des stations dont la qualité de réception du signal est trop faible pour assurer une bonne fiabilité des résultats.

Selon un mode de réalisation, le procédé comporte en outre déterminer une date de réception seuil et ne pas tenir compte du signal radio reçu par les stations présentant une date de réception du signal supérieure à la date de réception seuil. Grâce à ces caractéristiques, la fiabilité de la géolocalisation est satisfaisante. En particulier, il est ainsi possible d'écarter des stations dont la réception du signal pourrait correspondre à une réception de signal multitrajets.

Selon un mode de réalisation, le procédé comporte en outre déterminer qu'une distance entre deux stations de réception est inférieure à un écart seuil et effectuer l'étape de définition de la zone de balayage en utilisant une position commune pour lesdites deux stations de réception présentant une distance inférieure à l'écart seuil.

Selon un mode de réalisation, lors de l'étape de définition de la zone de balayage en fonction des positions des stations de réception, on ne tient pas compte de la position de l'une parmi lesdites deux stations de réception dont la distance est inférieure à l'écart seuil. Autrement dit, la position commune utilisée pour les deux stations de réception présentant une distance inférieure à l'écart seuil est la position de l'une desdites deux stations.

Selon un mode de réalisation, le procédé comporte en outre déterminer une position médiane entre lesdites deux stations de réception dont la distance est inférieure à l'écart seuil et effectuer l'étape de définition de la zone de balayage en fonction de la position médiane calculée en lieu et sans tenir compte des positions desdites deux stations ayant permis de calculer cette position médiane. Autrement dit, l'étape de définition de la zone de balayage est réalisée en fonction des positions des stations de réception autres que lesdites deux stations de réception et en fonction de la position médiane entre lesdites deux stations de réception dont la distance est inférieure à l'écart seuil.

Selon un mode de réalisation, le signal radio émis par le dispositif émetteur de signal comporte une charge utile et une entête, ladite entête comportant un identifiant et une date d'émission dudit signal, le procédé comportant en outre identifier le signal radio par chaque station de réception à l'aide de l'identifiant contenu dans l'entête du signal.

Selon un mode de réalisation, la pluralité de stations de réception sont connectées à un serveur, le procédé comportant en outre, pour chaque station de réception, transmettre au serveur un message comportant un identifiant du signal radio, une information de qualité de réception du signal radio par la station de réception, une date de réception du signal radio, et un identifiant de la station de réception.

Selon un mode de réalisation, l'invention fournit également un dispositif de géolocalisation d'un dispositif émetteur de signal radio, ledit dispositif émetteur de signal émettant un signal radio, le dispositif de géolocalisation comportant :

a. un module de sélection pour sélectionner une station de référence parmi la pluralité de stations de réception ayant reçu le signal radio,

b. un module de définition d'une zone de balayage configuré pour définir une zone de balayage en fonction des positions desdites stations de réception,

c. un module de subdivision configuré pour subdiviser la zone de balayage en une pluralité de sous-zones en fonction d'une granularité de balayage,

d. un module de calcul d'un degré d'erreur cumulée configuré pour, pour chaque sous-zone, calculer un degré d'erreur cumulée de ladite sous-zone, le calcul du degré d'erreur cumulée de ladite sous-zone comportant :

- déterminer une position testée comprise dans ladite sous-zone,
- calculer pour chaque station de réception un paramètre d'erreur de transmission respectif en fonction d'une date de réception du signal radio par ladite station de réception, d'une date de réception du signal radio par la station de référence, d'une vitesse de propagation du signal radio, d'une distance entre la position testée et ladite station de réception et d'une distance entre la position testée et la station de référence,

- calculer le degré d'erreur cumulée de la sous-zone en fonction des paramètres d'erreur de transmission calculés pour l'ensemble des stations de réception,

e. un module de sélection de sous-zone configuré pour sélectionner une sous-zone présentant un degré d'erreur cumulé minimal comme sous-zone de localisation du dispositif émetteur de signal,

dans lequel le module de définition de la zone de balayage est également configuré pour définir une nouvelle zone de balayage, la nouvelle zone de balayage incluant et étant centrée sur la sous-zone de localisation sélectionnée par le module de sélection de sous-zone, le module de subdivision étant en outre configuré pour définir une nouvelle granularité de balayage inférieure à la granularité de balayage, le dispositif de géolocalisation étant configuré pour géolocaliser de façon itérative le dispositif émetteur de signal à partir des zones de balayages et de la granularité définies de façon itératives par le module de définition de la zone de balayage et le module de subdivision, et dans lequel à chaque itération, la nouvelle zone de balayage est définie comme égale à la sous-zone de localisation sélectionnée par le module de sélection de sous-zone augmentée d'une marge entourant complètement la sous-zone de localisation et dont la largeur est supérieure à la granularité de balayage.

Selon un mode de réalisation, l'invention fournit également un programme d'ordinateur contenant des instructions sur un support d'enregistrement et apte à être exécutées sur le dispositif ci-dessus pour effectuer le procédé tel que ci-dessus.

**Brève description des figures**

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.

- **La figure 1** est une représentation schématique d'un objet émetteur de signal radio au sein d'un réseau de communication étendu comportant une pluralité de passerelles de communication connectées à serveur ;

- **La figure 2** est une représentation schématique d'une zone géographique de balayage subdivisée en sous-zones et dans laquelle sont localisées une pluralité de stations de réception ;

- **La figure 3** est une représentation schématique de zones géographiques de balayage sélectionnées lors d'itérations successives du procédé de géolocalisation de la figure 4 ;

- **La figure 4** est un digramme illustrant les étapes successives d'un procédé de géolocalisation selon un premier mode de réalisation ;

- **La figure 5** est un digramme illustrant les étapes successives d'un procédé de géolocalisation selon un deuxième mode de réalisation.

**Description détaillée de modes de réalisation**

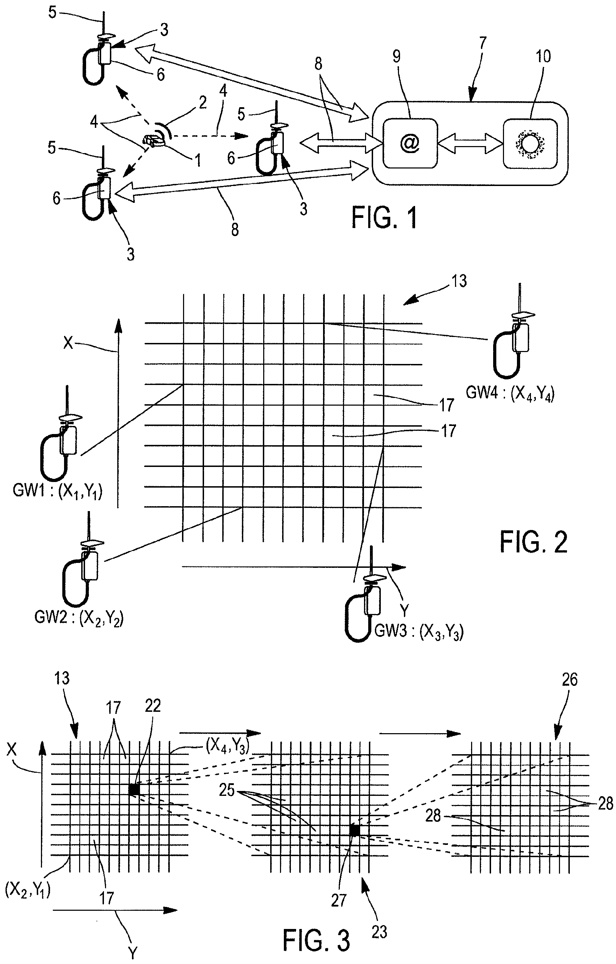

Sur la figure 1 est illustré un dispositif 1 émetteur de signal radio à géolocaliser. Un tel dispositif 1 est de tout type apte à communiquer des données via un signal radio 2, comme par exemple un dispositif 1 appartenant à l'internet des objets. Ce dispositif 1 peut être par exemple un capteur sans fil, tel qu'un compteur d'eau, de gaz ou autre. Un tel dispositif est équipé d'un module de communication sans fils et peut ainsi communiquer des données mesurées ou calculée, en fonction de ses caractéristiques, comme par exemple un relevé de compteur d'eau, de gaz ou autre. Un tel dispositif 1 appartenant à l'internet des objets a la particularité de consommer peu d'énergie, étant couramment qualifiés de « à basse consommation », et d'utiliser des moyens de communication à très bas débit, par exemple inférieur à 2Kbps.

Le signal radio 2 émis par le dispositif 1 comporte un entête et une charge utile. L'entête comporte des informations techniques permettant le traitement du signal radio 2. Ces informations techniques sont par exemple des informations sur le dispositif 1 ayant émis le signal radio 2, le destinataire du signal radio 2 ou encore un identifiant du signal radio 2. La charge utile du signal radio 2 quant à elle comporte les données transmises par le dispositif 1 et destinées à être traitées par le destinataire du signal radio 2 comme par exemple les données relevées par le capteur, des informations de surveillance de l'état du dispositif 1 ou autres informations requises par le destinataire du signal radio 2.

Lorsque le signal radio 2 est émis par le dispositif 1, ce signal radio 2 est reçu par une pluralité de station 3, ou passerelles de concentration de messages, situées aux alentours du dispositif 1, comme illustré par les flèches 4 sur la figure 1.

Sur la figure 1, trois stations 3 sont illustrées. Chaque station 3 comporte au moins une antenne 5. Cette antenne 5 permet de capter les signaux radio 2 émis dans un rayon donné autour de ladite station 3. La station 3 comporte également un boîtier de contrôle 6 permettant de traiter le signal radio 2 reçu. Le traitement du signal radio 2 par le boitier de contrôle 6 consiste à minima à transmettre les informations contenues dans le signal radio 2 à un serveur distant 7. Pour cela, le boitier de contrôle 6 comporte une interface de communication connectée à un réseau tel qu'un réseau de communication étendu du type internet ou autre.

Le boîtier de contrôle 6 envoie via ce réseau de communication un message 8 au serveur distant 7. Ce message 8 contient les informations contenues dans le signal radio 2 reçu auxquelles sont associées des informations complémentaires. Ces informations complémentaires sont par exemple une information de qualité de réception du signal radio 2 reçu, une date d'arrivée du signal radio 2 à la station 3 ou encore un identifiant de la station 3. Ainsi, dans l'exemple illustré sur la figure 1, le signal radio 2 émis par le dispositif 1 est reçu par trois stations 3 et chaque station 3 envoie au serveur distant 7 un message 8 respectif 8 comportant le contenu du signal radio 2 associé aux informations de qualité de réception du signal radio 2, d'identification de la station 3 et de date de réception du signal radio 2 par ladite station 3. La qualité du signal reçu par la station 3 est par exemple exprimée par le RSSI (de l'acronyme anglais « *Received Signal Strength Indication* ») et/ou le rapport signal sur bruit, ci-après dénommé SNR de l'acronyme anglais « *Signal to Noise Ratio* », du signal radio 2.

Le serveur distant 7 comporte un agrégateur de flux 9 et une application de localisation 10 (par exemple du type LBS de l'acronyme anglais « *Location-Based Service* »). L'agrégateur de flux 9 permet de recevoir l'ensemble des messages 8 transmis par les stations 3. Cet agrégateur de flux 9 est configuré pour décoder l'entête du signal radio 2 afin d'en extraire le numéro d'identification du signal radio 2. L'agrégateur de flux 9 transmet à l'application de localisation 10, pour chaque message 8 reçu par l'agrégateur de flux 9, l'identifiant du signal radio 2, la date de réception du signal radio 2 par la station 3, l'identifiant de la station 3, et l'information de qualité de réception du signal radio 2 par la station 3. L'application de localisation 10 géolocalise le dispositif 1 ayant émis le signal radio 2 à partir de ces données comme expliqué ci-après en regard des figures 2 à 5.

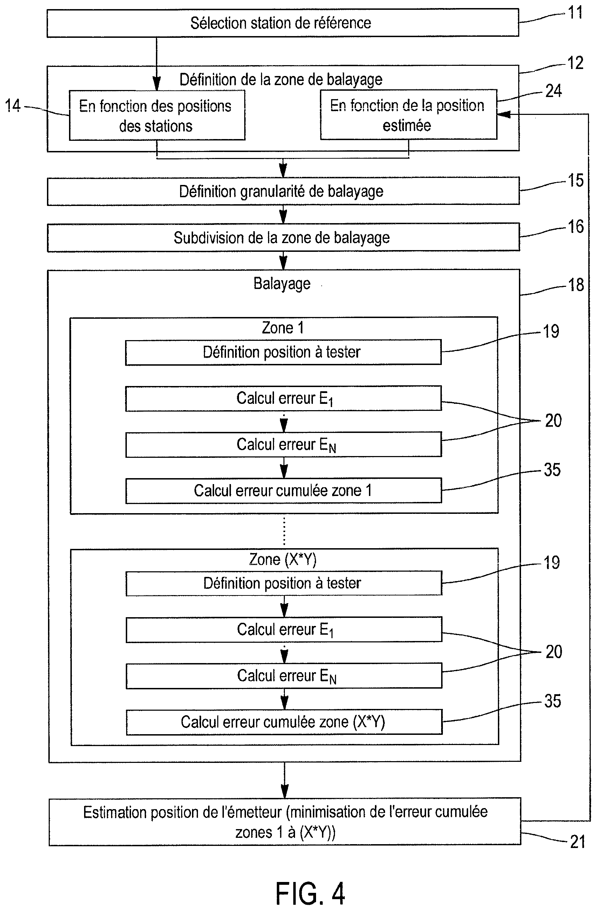

Lorsque l'application de localisation 10 reçoit, pour un même signal radio 2, une pluralité de données depuis au moins trois stations 3 distinctes ayant reçu ledit signal radio 2, l'application de localisation 10 peut géolocaliser par triangulation le dispositif 1 ayant émis ledit signal radio 2. Cette identification de réception d'un même signal radio 2 par des stations 3 distinctes est réalisée à l'aide de l'identifiant de signal radio 2 décodé depuis l'entête dudit signal radio 2, autrement dit lorsqu'au moins trois messages 8 comportent le même identifiant de signal radio 2, l'application de localisation 10 peut réaliser une géolocalisation du dispositif 1 au moyen du procédé de géolocalisation illustré sur la figure 4.

Dans une première étape 11 du procédé de géolocalisation illustré sur la figure 4, l'application de géolocalisation 10 sélectionne une station de référence parmi les stations 3 ayant reçu le signal radio 2. Cette station de référence est déterminée de façon arbitraire. Ainsi, dans un mode de réalisation, la station de référence est la station 3 présentant la date de réception du signal radio 2 la plus basse, c'est-à-dire la station 3 ayant reçu le signal radio 2 le plus tôt.

Dans une deuxième étape 12, l'application de géolocalisation 10 détermine une zone de balayage 13 pour localiser le dispositif 1.

Lors d'une première itération du procédé de géolocalisation, l'étape 12 de définition de la zone de balayage 13 comporte une étape 14 de définition de la zone de balayage 13 en fonction des coordonnées des stations 3 ayant reçu le signal radio 2. La figure 2 illustre un exemple de réalisation de l'étape 14 de définition de la zone de balayage 13 lors de la première itération du procédé de géolocalisation et dans le cadre d'un signal radio 2 ayant été reçu par quatre stations 3 distinctes référencées GWi, i allant de 1 à 4 sur la figure 2. Chaque station GWi est localisée et présente des coordonnées (Xi, Yi) correspondant respectivement à sa latitude et à sa longitude. Afin de définir la zone de balayage 13 lors de cette étape 14 de la première itération du procédé de géolocalisation, l'application de géolocalisation 10 détermine les latitudes maximales et minimales des stations GWi ainsi que les longitudes maximales et minimales desdites stations GWi ayant reçu le signal radio 2. Ainsi, dans l'exemple illustré sur la figure 2, le procédé de géolocalisation 10 détermine que la latitude minimale des stations est la latitude de valeur X2 de la station GW2 et la latitude maximale est la latitude X4 de la station GW4. De même, la longitude minimale est la longitude Y1 de la station GW1 et la longitude maximale est la longitude Y3 de la station GW3. La zone de balayage 13 définie lors de cette étape 14 est délimitée par les coordonnées maximales et minimales ainsi déterminées. Ainsi, la zone de balayage 13 définie lors de cette étape 14 dans l'exemple illustré sur la figure 2 est définie comme la zone comprise entre les latitudes X2 et X4 et les longitudes comprises entre Y1 et Y3. La zone de balayage 13 ainsi définie représente une zone géographique comportant chacune des stations GWi ayant reçu le signal radio 2. Cette zone de balayage 13 définie à l'aide des coordonnées des stations GWi peut éventuellement être augmentée d'une marge entourant ladite zone de balayage 13, une telle marge permettant d'obtenir une meilleure fiabilité de géolocalisation.

Lorsque la zone de balayage 13 est définie, l'application de géolocalisation 10 détermine lors d'une étape 15 une granularité de balayage. Lors de la première itération du procédé de géolocalisation, cette granularité de balayage est définie de façon arbitraire, par exemple à une valeur de 1° de latitude/ longitude. La zone de balayage 13 est ensuite, lors d'une étape 16 du procédé de géolocalisation, subdivisée en sous-zones 17 carrées en fonction de la granularité de balayage, c'est-à-dire des sous-zones 17 carrées de 1° de cotés entre les coordonnées (X1, Y2) et (X4, Y3) dans l'exemple illustré sur la figure 2.

L'application de localisation 10 balaie la zone de balayage 13 lors d'une étape de balayage 18 afin de déterminer la sous-zone 17 comportant le dispositif 1 émetteur du signal radio 2. Pour cela, pour chaque sous-zone 17, l'application de géolocalisation 10 définit lors d'une étape 19 une position à tester pour la sous-zone correspondante. Cette position à tester présente des coordonnées (k,l) comprises dans ladite sous-zone 17. Cette position à tester est par exemple centrée dans la sous-zone 17. La règle de définition de la position à tester pour chaque sous-zone 17 est appliquée de façon homogène pour l'ensemble des sous-zones 17 de la zone de balayage 13.

Pour chaque sous-zone 17, l'application de géolocalisation 10 calcule un paramètre d'erreur cumulée associé à ladite sous-zone 17. L'application de géolocalisation 10 calcule pour cela, lors d'une étape 20, pour chaque station 3, un paramètre d'erreur $E_i^{k,l}$. Pour cela, pour chaque station, l'application de géolocalisation 10 applique la formule suivante :

$$E_i^{k,l} = \left| d_i^{k,l} - d_0^{k,l} \right| - \left| ((T_i - T_0) * C) \right|$$

Dans laquelle :

$E_i^{k,l}$ est le paramètre d'erreur de la station i pour une position testée de coordonnées k,l ;

$d_i^{k,l}$ est la distance entre la station i et la position testée de coordonnées k, l. Cette distance est calculée à l'aide de l'information de localisation de la station i transmise par la station i dans le message 8 au serveur 7.

$d_0^{k,l}$ est la distance entre la station de référence et la position testée de coordonnées k,l. Cette distance est calculée à l'aide de l'information de localisation de la station de référence transmise dans le message 8 transmis par ladite station de référence au serveur 7 ;

Ti est la date de réception du signal radio 2 par la station i ;

T0 est la date de réception du signal radio 2 par la station de référence ;

C est la vitesse de propagation du signal radio 2.

Ce calcul du paramètre d'erreur 20 est effectué pour la position testée (k,l) de chaque sous-zone 17 pour l'ensemble des stations 3 ayant reçu le signal radio 2

Lorsque l'ensemble des paramètres d'erreur $E_i^{k,l}$ d'une sous-zone 17 ont été calculé pour toutes les stations i ayant reçu le signal radio 2, ladite sous-zone 17 comportant la position testée est associée à un paramètre d'erreur cumulée correspondant à la somme des paramètres d'erreur $E_i^{k,l}$ ainsi calculés pour cette sous-zone 17. Autrement dit, l'application de géolocalisation 10 calcule lors d'une étape 35 pour chaque sous-zone 17 un paramètre d'erreur cumulée selon la formule suivante :

$$\sum_{i=2}^{N} E_i^{k,l}$$

Dans laquelle i est la station testée, N est le nombre de stations ayant reçu le signal radio 2 et $E_i^{k,l}$ est le paramètre d'erreur calculé par la station i pour les coordonnées (k,l) correspondant à la position à tester dans la sous-zone 17 correspondante.

Dès lors que l'ensemble des paramètres d'erreur cumulée sont calculés pour l'ensemble des sous-zones 17, l'application de géolocalisation 10 sélectionne lors d'une étape 21 la sous-zone 17 présentant le plus faible paramètre d'erreur cumulée. Cette sous-zone sélectionnée est la sous-zone 17 dans laquelle est situé le dispositif 1 émetteur du signal radio 2.

Cependant, cette localisation est réalisée avec un degré de précision correspondant à la granularité de balayage définie lors de l'étape 15. Il est donc préférable d'effectuer de nouvelles itérations du procédé de géolocalisation d'une part en réduisant la zone de balayage 13 mais également en réduisant la granularité de balayage comme cela est illustré en figure 3. Ainsi, pour chaque itération, il est nécessaire de redéfinir la zone de balayage, la granularité de balayage afin de subdiviser la zone de balayage redéfinie, de calculer l'erreur cumulée pour toutes les sous-zones de la nouvelle zone de balayage et de sélectionner comme sous-zone la sous-zone présentant le plus petit paramètre d'erreur cumulée.

Sur la figure 3, la zone de balayage 13 à gauche de la figure 3 illustre la zone de balayage 13 correspondant à la zone de balayage 13 illustrée sur la figure 2 et définie lors d'une première itération du procédé de géolocalisation défini en figure 4. Lors de cette première itération, le paramètre d'erreur cumulé le plus faible a été identifié dans la sous-zone référencée 22 sur la figure 3, cette sous-zone 22 présentant des coordonnées comprises entre (X2+6°,Y1+6°) et (X2+7°,Y1+7°). Afin d'améliorer la précision de la géolocalisation du dispositif 1, au moins une deuxième itération du procédé de géolocalisation est nécessaire. Une première étape de cette deuxième itération est de définir une nouvelle zone de balayage 23 lors d'une étape 24 du procédé illustré sur la figure 4. Cette nouvelle zone de balayage 23 est définie comme étant la sous-zone 22 sélectionnée lors de la première itération lors de l'étape 21. Ainsi, dans l'exemple illustré sur la figure 3, cette nouvelle zone de balayage 23 est comprise entre les latitudes X2+6° et X2+7° et les longitudes Y1+6° et Y1+7°.

Dès lors que l'application de géolocalisation 10 a défini cette nouvelle zone de balayage 23, l'application de géolocalisation 10 réitère l'étape 15 afin de définir une nouvelle granularité pour le balayage de la nouvelle zone de balayage 23. Cette nouvelle granularité de balayage est par exemple une fraction de la granularité de balayage définie lors de l'étape 15 de l'itération précédente, c'est-à-dire la première itération. Dans l'exemple illustré sur les figures 2 et 3, la granularité de balayage définie pour la zone de balayage 13 lors de la première itération était de 1°. Lors de la deuxième itération, la granularité de balayage est définie comme une fraction de la granularité de balayage de la première itération, par exemple une granularité de balayage de 0.1°.

L'application de géolocalisation 10 réitère l'étape de subdivision 16 en l'appliquant sur la nouvelle zone de balayage 23. Ainsi, la nouvelle zone de balayage 23 est subdivisée en une pluralité de sous-zones 25 carrées de 0.1° de côté. L'application de géolocalisation 10 réalise l'étape de balayage 18 sur l'ensemble des sous-zones 25 afin de calculer le paramètre d'erreur cumulée pour chacune de ces sous-zones 25. Ainsi, pour chaque sous-zone 25, l'application de géolocalisation définit une nouvelle position à tester, un paramètre d'erreur à la position testée est calculé pour chaque station 3 et un paramètre d'erreur cumulée est associé à chaque sous-zone 25. L'application de géolocalisation 10 sélectionne alors la sous-zone 25 présentant le plus faible paramètre d'erreur cumulée comme étant la sous-zone 25 dans laquelle est situé le dispositif 1.

L'application de géolocalisation 10 peut exécuter une pluralité d'itérations afin d'améliorer la précision de géolocalisation. Ainsi, de façon analogue à la deuxième itération, une troisième itération définit une nouvelle zone de balayage 26 comme étant la sous-zone 25 sélectionnée lors de l'étape 21 de l'itération précédente, c'est-à-dire lors de la deuxième itération. Ainsi, sur la figure 3, la deuxième itération aboutit à la sélection d'une sous-zone 27 parmi les sous-zones 25 comme présentant le plus faible paramètre d'erreur cumulée. Cette sous-zone 27 est la zone de comprise entre les latitudes X2+6,2° et X2+6.3° et les longitudes Y1+6,8° Y1+6,9°. La nouvelle zone de balayage 26 est définie lors de cette troisième itération comme la sous-zone 27 ainsi sélectionnée. Lors de cette troisième itération, une nouvelle granularité de balayage est définie lors de l'étape 15 comme une fraction de la granularité de balayage de la deuxième itération, par exemple une granularité de balayage de 0.01°. L'application subdivise alors la nouvelle zone de balayage 26 en fonction de cette nouvelle granularité de balayage et détermine alors les paramètres d'erreur cumulée des sous-zones 28 de cette nouvelle zone de balayage 26 avant de sélection ladite sous-zone 28 présentant le plus faible paramètre d'erreur cumulée.

L'application de géolocalisation 10 effectue de façon itérative le calcul des paramètres d'erreur cumulée pour des sous-zones de zones de balayages successives réduites avec des granularités de balayage réduites à chaque nouvelle itération. De préférence, l'application de géolocalisation 10 effectue au moins trois itération du calcul d'erreur cumulée et, préférentiellement, effectue sept itération successives de ce calcul d'erreur cumulée. Lors de la dernière itération, la sous-zone sélectionnée représente la sous-zone dans laquelle est géolocalisé le dispositif 1 émetteur du signal radio 2.

Afin d'éviter d'éventuelles erreurs de géolocalisation du dispositif 1, il est préférable lors des définitions successives des zones de balayage de l'étape 24 d'ajouter une marge à la sous-zone sélectionnée lors de l'étape 21 de l'itération précédente. En effet, la présence d'obstacles entre le dispositif 1 émetteur du signal radio 2 et les stations 3 recevant ledit signal radio 2 peut augmenter la date de réception du signal radio 2 par lesdites stations 3 et donc modifier le paramètre d'erreur associé à ladite station 3 lors de l'étape 20. En conséquence, le paramètre d'erreur cumulée minimal d'une zone de balayage peut être erroné de sorte que la sous-zone sélectionnée peut être une sous-zone ne comportant pas le dispositif 1.

Il est donc préférable de définir la nouvelle zone de balayage lors de l'étape 24 comme incluant la sous-zone sélectionnée lors de l'itération précédente à l'étape 21 et d'y ajouter une marge d'erreur. Une telle marge se développe sur une épaisseur prédéfinie tout autour de la sous-zone sélectionnée lors de l'étape 21 de l'itération précédente. Cette épaisseur est par exemple définie en fonction de la granularité utilisée lors du balayage de l'itération précédente. Dans un exemple de réalisation, la marge d'erreur présente une épaisseur autour de la sous-zone sélectionnée égale à la granularité de balayage de l'itération précédente multipliée par un entier positif, par exemple 5.

Dans l'exemple indiqué ci-dessus en regard de la figure 3 la définition de la nouvelle zone de balayage 23 lors de l'étape 24 de la deuxième itération est réalisée en ajoutant à la première sous-zone sélectionnée 22 une marge égale à cinq fois la granularité de 1° définie lors de la première itération. Ainsi, la nouvelle zone de balayage 23 est donc comprise entre les latitudes X2+(6-5*1)° et X2+(7+5*1)° et les longitudes Y1+(6-5)° Y1+(7+5)°, autrement dit comprise entre les latitudes X2+1° et X2+12° et les longitudes Y1+1° Y1+12°, avec une granularité de balayage de 0.1°. De manière analogue, la zone de balayage 26 définie lors de l'étape 24 de la troisième itération comporte la sous-zone 27 sélectionnée lors de l'étape 21 de la deuxième itération à laquelle est ajoutée une marge de cinq fois la granularité de balayage de 0.1° définie lors de la deuxième itération. Cette zone de balayage 26 définie lors de la troisième itération est donc comprise entre les latitudes X2+(6,2-0.1*5)° et X2+(6.3+0.1*5)° et les longitudes Y1+(6,8-0.1*5)° Y1+(6,9+0.1*5)°, soit entre les latitudes X2+5.7° et X2+6.8° et les longitudes Y1+6,3° Y1+7.4°, avec une granularité de balayage de 0.01°.

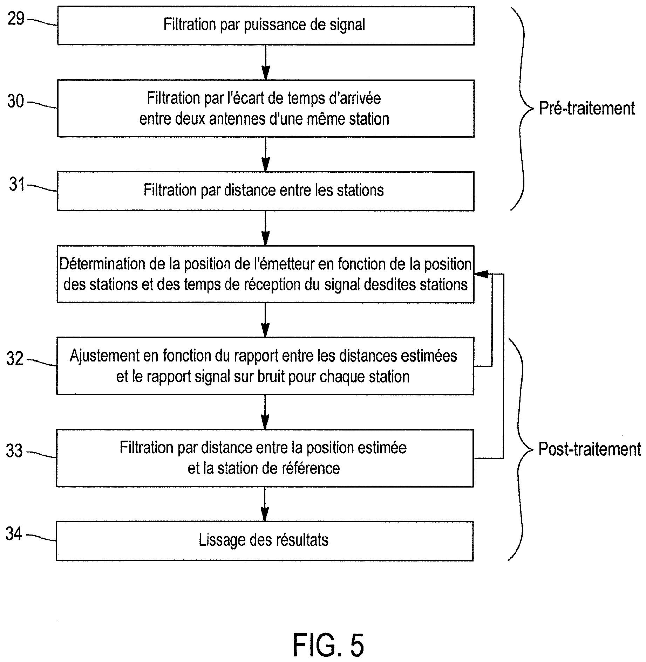

D'autres fonctionnalités du serveur 7 permettent également d'améliorer la qualité de géolocalisation du dispositif 1. Ainsi, comme illustré sur la figure 5, l'application de géolocalisation 10 peut comporter un prétraitement et un post-traitement au procédé de géolocalisation tel que décrit ci-dessus en regard de la figure 4.

Un premier prétraitement illustré à l'étape 29 de la figure 5 peut consister à écarter des stations 3 ayant reçu le signal radio 2 avec une qualité de signal trop faible pour être exploitable avec un degré de fiabilité satisfaisant. Ainsi, lorsque le message 8 transmis au serveur 7 par une station 3 présente une qualité de signal associée aux données correspondant audit signal radio 2 inférieure à une valeur seuil, cette station 3 n'est pas prise en compte par l'application de géolocalisation 10. Une telle valeur seuil est déterminée de façon arbitraire. Dans un exemple, dans le cas d'une qualité de signal exprimée à l'aide du RSSI, cette valeur seuil est de l'ordre de -130 dB. Ainsi, un message 8 d'une station 3 ayant reçu le signal radio 2 avec un RSSI inférieur à -130db n'est pas pris en compte par l'application de géolocalisation 10 pour la géolocalisation du dispositif 1.

Un deuxième prétraitement illustré par l'étape 30 de la figure 5 consiste à écarter les stations 3 présentant plusieurs antennes 5 de réception ayant reçu le signal radio 2 et dont l'écart de date de réception du signal radio 2 aux différentes antennes 5 de ladite station 3 sont supérieures à un écart seuil, par exemple un écart seuil de l'ordre de 1500 ns. Le message 8 correspondant à la date de réception la plus haute, c'est-à-dire le message correspondant au trajet le plus long et donc reçu en dernier, est alors écarté par l'application de géolocalisation 10 pour la géolocalisation du dispositif 1.

Dans un troisième prétraitement illustré par l'étape 31 sur la figure 5, une filtration selon les distances entre les différentes stations 3 ayant reçu le signal radio 2 est effectuée. Cette filtration a pour fonction de s'assurer que les stations 3 ayant reçu le message 8 sont suffisament éloignées les unes des autres pour assurer une bonne faisabilité de la géolocalisation. Typiquement, si deux stations 3 sont distantes d'une dizaine de mètres, l'étape 14 de définition de la zone de balayage 13 en fonction des coordonnées des stations 3 ayant reçu le message lors de la première itération du procédé de géolocalisation est afinée. Pour cela, ladite étape 14 de définition de la zone de balayage 13 comporte une étape (non illustrée) de comparaison des distances entre les stations 3 avec une distance seuil, par exemple de 500 mètres.

Selon une première variante, lorsque la distance entre deux des stations 3 ayant reçu le message est inférieure à cette distance seuil, seule la position géographique de l'une desdites deux stations 3 est prise en compte pour définir la zone de balayage 13 lors de l'étape 14 lors de la première itération du procédé de géolocalisation. La station 3 qui n'est pas prise en compte lors de cette étape 14 de définition de la zone de balayage 13 est choisie de façon arbitraire, par exemple comme étant celle qui a reçu le message en dernier. Cependant, cette station 3 n'est écartée que pour l'étape 14 de définition de la zone de balayage 13, les étapes de balayage 18 et de calcul d'erreur cumulée 35 demeurent eux effectués en intégrant les étapes 20 de calculs d'erreur desdites deux stations 3, y compris la station 3 écartée pour l'étape 14 de définition de la zone de balayage 13.

Dans une deuxième variante, lorsque la distance entre deux des stations 3 ayant reçu le message est inférieure à cette distance seuil, une position médiane entre lesdites deux stations 3 est calculée. L'étape 14 de définition de la zone de balayage 13 en fonction des coordonnées des stations 3 ayant reçu le message 8 est alors réalisée sans prendre en compte lesdites deux stations 3 mais en prenant en compte, en lieu et place desdites deux stations 3, la position médiane entre ces deux stations 3. Là encore, les étapes de balayages 18 et de calcul d'erreur cumulées 35 sont réalisés en prenant en compte lesdites deux stations 3.

Dans un premier post-traitement illustré à l'étape 32 de la figure 5, l'application de géolocalisation 10 corrige les distances estimées entre les stations 3 ayant reçu le signal radio 2 et la position estimée du dispositif 1. Pour cela, l'application calcule pour chaque station 3 un rapport SNR/dist entre le SNR (rapport signal sur bruit) du signal radio 2 reçu par une station 3 et la distance calculée entre la position estimée du dispositif 1 par l'application de géolocalisation 10 et la position de ladite station 3. L'application de géolocalisation 10 calcule alors une moyenne des rapports SNR/dist. Ce premier post-traitement 32 part du principe que les obstacles sont répartis de manière homogène dans la zone d'émission du signal radio 2 et que le rapport SNR/dist devrait être homogène pour toutes les stations 3 ayant reçu le signal.

Lorsqu'un rapport SNR/dist associé à un message 8 est supérieur à cette moyenne des rapports SNR/dist, l'application de géolocalisation 10 incrémente la date de réception du signal radio 2 par la station 3 correspondant audit message 8. Lorsqu'un rapport SNR/dist associé à un message 8 est inférieur à cette moyenne des rapports SNR/dist, l'application de géolocalisation 10 décrémente la date de réception du signal radio 2 par la station 3 correspondant audit message 8. Cette incrémentation ou décrémentation est réalisée par exemple avec une granularité de 10ns. En outre, cette modification de la date de réception du signal peut être proportionnelle à l'écart entre le rapport SNR/dist calculé et la moyenne des rapports SNR/dist. Ainsi, plus l'écart constaté entre la moyenne des rapports SNR/dist et le rapport SNR/dist d'un message 8 est important, plus la correction de la date de réception par la station 3 ayant transmis ledit message 8 est importante. L'application de géolocalisation 10 effectue alors une nouvelle fois la géolocalisation du dispositif 1 (définition de la station de référence et itérations successives de la définition de la zone de balayage, de la granularité de balayage, du calcul de paramètre d'erreur cumulée et de la sélection de la sous-zone) en utilisant les données de dates de réception du signal radio 2 ainsi modifiées.

Une deuxième étape 33 de post-traitement consiste à écarter un résultat de l'application de géolocalisation 10 qui serait trop proche ou trop éloigné de la station de référence, ce qui pourrait correspondre à une géolocalisation incohérente du dispositif 1. Autrement dit, une fois la géolocalisation de la position du dispositif 1 terminée, la distance entre cette position estimée du dispositif 1 et la station de référence est comparée à des valeurs maximales et minimales limites. Ces valeurs limites sont déterminées soit en absolu, soit en relatif par rapport aux différentes distances inter-stations 3 utilisées. Toute estimation trop éloignée de la station de référence est rejetée comme incohérente. De la même manière, toute estimation trop proche de la station de référence, par exemple inférieure à quelques dizaines de mètres, est aussi rejetée. L'application de géolocalisation effectue alors une nouvelle estimation de la géolocalisation du dispositif 1 comme expliqué ci-dessus en regard de la figure 4 en écartant du traitement la station de référence précédemment sélectionnée.

Un troisième post-traitement 34 peut consister à lisser les résultats fournis par l'application de géolocalisation 10 dans le temps et atténuer les écarts inhérents aux incertitudes de mesures. Ainsi, les estimations successives de la position d'un même dispositif 1 obtenues à l'aide de différents signaux radio 2 traités par l'application de géolocalisation 10 sont moyennées. Le nombre d'estimations utilisées sur chaque moyenne est dépendant du type de dispositif 1, plus le dispositif 1 est mobile et plus ce nombre est faible.

Le procédé de géolocalisation selon l'invention permet ainsi de géolocaliser un dispositif émetteur de signal en exploitant un signal généré par ledit dispositif sans nécessiter d'analyser la charge utile de ce signal. Ainsi, lorsque le dispositif envoie un signal tel qu'un relevé de compteur ou autre à l'attention d'un serveur distant, le procédé de géolocalisation selon l'invention permet de géolocaliser le dispositif en exploitant cette émission de signal sans nécessiter d'analyse du contenu de la charge utile du signal. Ainsi, le procédé selon l'invention permet de géolocaliser le dispositif sans nécessiter d'envoi d'un signal ad hoc par le dispositif mais en exploitant les signaux de fonctionnement usuels du dispositif. Le procédé de géolocalisation permet ainsi de géolocaliser le dispositif sans lui imposer de consommation énergétique ou de complexité supplémentaire par rapport à son fonctionnement normal.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

Certains des éléments représentés, notamment les composants de la passerelle, peuvent être réalisés sous différentes formes, de manière unitaire ou distribuée, au moyen de composants matériels et/ou logiciels. Des composants matériels utilisables sont les circuits intégrés spécifiques ASIC, les réseaux logiques programmables FPGA ou les microprocesseurs. Des composants logiciels peuvent être écrits dans différents langages de programmation, par exemple C, C++, Java ou VHDL. Cette liste n'est pas exhaustive.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Procédé de géolocalisation d'un dispositif émetteur de signal, ledit dispositif émetteur de signal émettant un signal radio (2), le procédé de géolocalisation comportant :

   a. Fournir des positions d'une pluralité de stations de réception (3, GWi) d'un réseau de communication radio et des dates de réception ($T_i$) du signal radio (2) par lesdites stations de réception (3, GWi),
   b. Sélectionner une station de référence (3, GWi) parmi la pluralité de stations de réception (3, GWi),
   c. Définir (14) une zone de balayage (13) en fonction des positions (Xi,Yi) desdites stations de réception (3, GWi),
   d. Subdiviser la zone de balayage (13) en une pluralité de sous-zones (17) en fonction d'une granularité de balayage,
   e. Pour chaque sous-zone (17, 25, 28), calculer un degré d'erreur cumulée de ladite sous-zone (17, 25, 28), le calcul du degré d'erreur cumulée de ladite sous-zone (17, 25, 28) comportant :

      o déterminer (19) une position testée (k,l) comprise dans ladite sous-zone (17, 25, 28),
      o calculer pour chaque station de réception (3, GWi) un paramètre d'erreur $(E_i^{k,l})$ de transmission respectif en fonction d'une date de réception ($T_i$) du signal radio (2) par ladite station de réception (3, GWi), d'une date de réception du signal radio (2) par la station de référence ($T_0$), d'une vitesse de propagation (C) du signal radio (2), d'une distance $(d_i^{k,l})$ entre la position testée (k,l) et ladite station de réception (3, GWi) et d'une distance $(d_0^{k,l})$ entre la position testée (k,l) et la station de référence,

      ∘ calculer le degré d'erreur cumulée de la sous-zone (17, 25, 28) en fonction des paramètres d'erreur $(E_i^{k,l})$ de transmission calculés pour l'ensemble des stations de réception (3, GWi),

   f. sélectionner (21) une sous-zone (22, 27) présentant un degré d'erreur cumulé minimal comme sous-zone (22, 27) de localisation du dispositif (1) émetteur de signal,
   g. définir (24) une nouvelle zone de balayage (23, 26), la nouvelle zone de balayage (23, 26) incluant et étant centrée sur la sous-zone (22, 27) de localisation sélectionnée à l'étape f),
   h. définir (15) une nouvelle granularité de balayage inférieure à la granularité de balayage,
   i. itérer le procédé à partir de l'étape d) avec la nouvelle zone de balayage (23, 26) en tant que zone de balayage (23, 26) et la nouvelle granularité en tant que granularité et **caractérisé en ce que**

   à chaque itération la nouvelle zone de balayage (23, 26) est définie à l'étape h) comme égale à la sous-zone (22, 27) de localisation sélectionnée à l'étape f) augmentée d'une marge entourant complétement la sous-zone (22, 27) de localisation et dont la largeur est supérieure à la granularité de balayage.

2. Procédé selon la revendication 1, dans lequel définir la zone de balayage (14) comporte déterminer une longitude maximale des stations de réception (3, GWi), une longitude minimale des stations de réception (3, GWi), une latitude maximale des stations de réception (3, GWi), une latitude minimale des stations de réception (3, GWi), la zone de balayage (13) étant délimitée par lesdites longitudes et latitudes maximales et minimales.

3. Procédé selon l'une des revendications 1 à 2, comportant un nombre d'itération supérieur à 3, par exemple 7.

4. Procédé selon l'une des revendications 1 à 3, dans lequel l'étape de calcul du paramètre d'erreur de transmission (35) d'une station de réception répond à la formule :

$$E_i^{k,l} = \left| d_i^{k,l} - d_0^{k,l} \right| - \left| ((T_i - T_0) * C) \right|$$

Dans lequel $E_i^{k,l}$ est le paramètre d'erreur de la station de réception (3, GWi) à la position (k,l) testée, $d_i^{k,l}$ est la distance entre la position testée (k,l) et la station de réception (3, GWi), $d_0^{k,l}$ est la distance entre la position testée (k,l) et la station de référence, $T_i$ est la date de réception du signal radio (2) par la station de réception (3, GWi), $T_0$ est la date de réception du signal radio (2) par la station de référence, et C est la vitesse de propagation du signal radio (2) émis par le dispositif (1) émetteur de signal.

5. Procédé selon l'une des revendications 1 à 4, dans lequel le degré d'erreur cumulée d'une sous-zone (17, 25, 28) est la somme des paramètres d'erreur de transmission de la pluralité de stations de réception (3, GWi) pour ladite sous-zone (17, 25, 28).

6. Procédé selon l'une des revendications 1 à 5, comportant en outre déterminer un seuil de qualité de signal et ne pas tenir compte du signal radio reçu par les stations de réception dont la qualité de réception du signal radio est inférieure au seuil de qualité de signal déterminé.

7. Procédé selon l'une des revendications 1 à 6, comportant en outre déterminer une date de réception seuil et ne pas tenir compte du signal radio reçu par les stations présentant une date de réception du signal supérieure à la date de réception seuil.

8. Procédé selon l'une des revendications 1 à 7, comportant en outre déterminer qu'une distance entre deux stations de réception (3, GWi) est inférieure à un écart seuil et effectuer l'étape c) de définition de la zone de balayage (13) en utilisant une position commune pour lesdites deux stations de réception (3, GWi) présentant une distance inférieure à l'écart seuil.

9. Procédé selon l'une des revendications 1 à 8, dans lequel le signal radio (2) émis par le dispositif (1) émetteur de signal comporte une charge utile et une entête, ladite entête comportant un identifiant et une date d'émission dudit signal radio (2), le procédé comportant en outre identifier le signal radio par chaque station de réception (3, GWi) à l'aide de l'identifiant contenu dans l'entête du signal.

10. Procédé selon l'une des revendications 1 à 9, dans lequel la pluralité de stations de réception (3, GWi) sont connectées à un serveur (7), le procédé comportant en outre, pour chaque station de réception (3, GWi), transmettre au serveur (7) un message (8) comportant un identifiant du signal radio, une information de qualité de réception du signal radio (2) par la station de réception (3, GWi), une date de réception du signal radio (2), et un identifiant de la station de réception (3, GWi).

11. Dispositif de géolocalisation d'un dispositif émetteur de signal radio, ledit dispositif émetteur de signal émettant un signal radio, le dispositif de géolocalisation comportant :

a. un module de sélection pour sélectionner une station de référence (3, GWi) parmi la pluralité de stations de réception (3, GWi) ayant reçu le signal radio (2),
b. un module de définition d'une zone de balayage (13) configuré pour définir une zone de balayage (13) en fonction des positions (Xi,Yi) desdites stations de réception (3, GWi),
c. un module de subdivision configuré pour subdiviser la zone de balayage (13) en une pluralité de sous-zones (17) en fonction d'une granularité de balayage,
d. un module de calcul d'un degré d'erreur cumulée configuré pour, pour chaque sous-zone (17, 25, 28), calculer un degré d'erreur cumulée de ladite sous-zone (17, 25, 28), le calcul du degré d'erreur cumulée de ladite sous-zone (17, 25, 28) comportant :

- déterminer une position testée (k,l) comprise dans ladite sous-zone (17, 25, 28),
- calculer pour chaque station de réception (3, GWi) un paramètre d'erreur $(E_i^{k,l})$ de transmission respectif en fonction d'une date de réception $(T_i)$ du signal radio (2) par ladite station de réception (3, GWi), d'une date de réception du signal radio (2) par la station de référence $(T_0)$, d'une vitesse de propagation (C) du signal radio (2), d'une distance $(d_i^{k,l})$ entre la position testée (k,l) et ladite station de réception (3, GWi) et d'une distance $(d_0^{k,l})$ entre la position testée (k,l) et la station de référence,
- calculer le degré d'erreur cumulée de la sous-zone (17, 25, 28) en fonction des paramètres d'erreur $(E_i^{k,l})$ de transmission calculés pour l'ensemble des stations de réception (3, GWi),

e. un module de sélection de sous-zone configuré pour sélectionner une sous-zone (22, 27) présentant un degré d'erreur cumulé minimal comme sous-zone (22, 27) de localisation du dispositif (1) émetteur de signal,

dans lequel le module de définition de la zone de balayage est également configuré pour définir une nouvelle zone de balayage (23, 26), la nouvelle zone de balayage (23, 26) incluant et étant centrée sur la sous-zone (22, 27) de localisation sélectionnée par le module de sélection de sous-zone, le module de subdivision étant en outre configuré pour définir une nouvelle granularité de balayage inférieure à la granularité de balayage, le dispositif de géolocalisation étant configuré pour géolocaliser de façon itérative le dispositif émetteur de signal à partir des zones de balayages et de la granularité définies de façon itératives par le module de définition de la zone de balayage et le module de subdivision, et le dispositif est **caractérisé en ce que** à chaque itération, la nouvelle zone de balayage (23, 26) est définie comme égale à la sous-zone (22, 27) de localisation sélectionnée par le module de sélection de sous-zone augmentée d'une marge entourant complètement la sous-zone (22, 27) de localisation et dont la largeur est supérieure à la granularité de balayage.

12. Produit programme d'ordinateur comprenant des instructions de code de programme enregistrées sur un support lisible par ordinateur pour mettre en œuvre les étapes du procédé selon l'une des revendications 1 à 10 lorsque ledit programme fonctionne sur le dispositif de la revendication 11.

**Patentansprüche**

1. Verfahren zur Geopositionierung einer Signalsendevorrichtung, wobei die Signalsendevorrichtung ein Funksignal (2) aussendet, wobei das Verfahren zur Geopositionierung umfasst:

   a. Bereitstellen der Positionen einer Vielzahl von Empfangsstationen (3, GWi) eines Funkkommunikationsnetzes und der Daten des Empfangs ($T_i$) des Funksignals (2) durch die Empfangsstationen (3, GWi),
   b. Auswählen einer Bezugsstation (3, GWi) aus der Vielzahl von Empfangsstationen (3, GWi),
   c. Definieren (14) eines Abtastbereichs (13) in Abhängigkeit von den Positionen (Xi,Yi) der Empfangsstationen (3, GWi),
   d. Unterteilen des Abtastbereichs (13) in eine Vielzahl von Teilbereichen (17) in Abhängigkeit von einer Granularität der Abtastung,
   e. Berechnen eines Grades eines kumulativen Fehlers des Teilbereichs (17, 25, 28) für jeden Teilbereich (17, 25, 28), wobei die Berechnung des Grades des kumulativen Fehlers des Teilbereichs (17, 25, 28) umfasst:

      ◦ Bestimmen (19) einer geprüften Position (k,l), die im Teilbereich (17, 25, 28) enthalten ist,

      ◦ Berechnen eines jeweiligen Übertragungsfehlerparameters ($E_i^{k.l}$) für jede Empfangsstation (3, GWi) in Abhängigkeit von einem Datum des Empfangs ($T_i$) des Funksignals (2) durch die Empfangsstation (3, GWi), einem Datum des Empfangs des Funksignals (2) durch die Bezugsstation ($T_0$), einer Fortpflanzungsgeschwindigkeit (C) des Funksignals (2), einer Entfernung ($d_i^{k,l}$) zwischen der geprüften Position (k,l) und der Empfangsstation (3, GWi) und einer Entfernung ($d_0^{k,l}$) zwischen der geprüften Position (k,l) und der Bezugsstation,
      ◦ Berechnen des Grades des kumulativen Fehlers des Teilbereichs (17, 25, 28) in Abhängigkeit von den Übertragungsfehlerparametern ($E_i^{k.l}$) , die für die Gesamtheit der Empfangsstationen (3, GWi) berechnet werden,

   f. Auswählen (21) eines Teilbereichs (22, 27), der einen minimalen Grad des kumulativen Fehlers aufweist, als Teilbereich (22, 27) zur Positionierung der Signalsendevorrichtung (1),
   g. Definieren (24) eines neuen Abtastbereichs (23, 26), wobei der neue Abtastbereich (23, 26) den im Schritt f) ausgewählten Teilbereich (22, 27) zur Positionierung einschließt und auf diesen zentriert ist.
   h. Definieren (15) einer neuen Granularität der Abtastung, die niedriger ist als die Granularität der Abtastung,
   i. Iterieren des Verfahrens ab Schritt d) mit dem neuen Abtastbereich (23, 26) als Abtastbereich (23, 26) und der neuen Granularität als Granularität und **dadurch gekennzeichnet, dass** bei jeder Iteration der neue Abtastbereich (23, 26) in Schritt h) als gleich dem in Schritt f) ausgewählten Teilbereich (22, 27) zur Positionierung definiert wird, vergrößert um einen Spielraum, der den Teilbereich (22, 27) der Positionierung vollständig umgibt und dessen Größe größer als die Granularität der Abtastung ist.

2. Verfahren nach Anspruch 1, wobei Definieren des Abtastbereichs (14) Bestimmen eines maximalen Längengrades der Empfangsstationen (3, GWi), eines minimalen Längengrades der Empfangsstationen (3, GWi), eines maximalen Breitengrades der Empfangsstationen (3, GWi), eines minimalen Breitengrades der Empfangsstationen (3, GWi) umfasst, wobei der Abtastbereich (13) durch die maximalen und minimalen Längen- und Breitengrade begrenzt ist.

3. Verfahren nach einem der Ansprüche 1 und 2, das eine Anzahl von Iterationen größer als 3 umfasst, zum Beispiel 7.

4. Verfahren nach einem der Ansprüche 1 bis 3, wobei der Schritt der Berechnung des Übertragungsfehlerparameters (35) einer Empfangsstation folgender Formel entspricht:

$$E_i^{k,l} = \left| d_i^{k,l} - d_0^{k,l} \right| - \left| ((T_i - T_0) * C) \right|$$

wobei $E_i^{k,l}$ der Fehlerparameter der Empfangsstation (3, GWi) an der geprüften Position (k,l) ist, $d_i^{k,l}$ die Entfernung zwischen der geprüften Position (k,l) und der Empfangsstation (3, GWi) ist, $d_0^{k,l}$ die Entfernung zwischen der geprüften Position (k,l) und der Bezugsstation ist, $T_i$ das Datum des Empfangs des Funksignals (2) durch die Empfangsstation (3, GWi) ist, $T_0$ das Datum des Empfangs des Funksignals (2) durch die Bezugsstation ist und C die Fortpflanzungsgeschwindigkeit des Funksignals (2) ist, das von der Signalsendevorrichtung (1) ausgesendet wird.

5. Verfahren nach einem der Ansprüche 1 bis 4, wobei der Grad des kumulativen Fehlers eines Teilbereichs (17, 25, 28) die Summe der Übertragungsfehlerparameter der Vielzahl von Empfangsstationen (3, GWi) für den Teilbereich (17, 25, 28) ist.

6. Verfahren nach einem der Ansprüche 1 bis 5, außerdem umfassend Bestimmen einer Signalqualitätsschwelle und Nichtberücksichtigen des Funksignals, das von den Empfangsstationen empfangen wird, deren Empfangsqualität des Funksignals unter der bestimmten Signalqualitätsschwelle liegt.

7. Verfahren nach einem der Ansprüche 1 bis 6, außerdem umfassend Bestimmen eines Schwellenempfangsdatums und Nichtberücksichtigen des Funksignals, das von den Stationen empfangen wird, die ein Datum des Signalempfangs aufweisen, das größer ist als das Schwellenempfangsdatum.

8. Verfahren nach einem der Ansprüche 1 bis 7, außerdem umfassend Bestimmen, dass eine Entfernung zwischen zwei Empfangsstationen (3, GWi) kleiner als ein Schwellenabstand ist, und Durchführen des Schritts c) der Definition des Abtastbereichs (13), indem eine gemeinsame Position für die beiden Empfangsstationen (3, GWi) verwendet wird, die eine kleinere Entfernung als den Schwellenabstand aufweisen.

9. Verfahren nach einem der Ansprüche 1 bis 8, wobei das Funksignal (2), das von der Signalsendevorrichtung (1) ausgesendet wird, eine Nutzlast und einen Kopf umfasst, wobei der Kopf eine Kennung und ein Sendedatum des Funksignals (2) umfasst, wobei das Verfahren außerdem Erkennen des Funksignals durch jede Empfangsstation (3, GWi) mithilfe der im Kopf des Signals enthaltenen Kennung umfasst.

10. Verfahren nach einem der Ansprüche 1 bis 9, wobei die Vielzahl der Empfangsstationen (3, GWi) mit einem Server (7) verbunden sind, wobei das Verfahren außerdem für jede Empfangsstation (3, GWi) Übertragen einer Meldung (8), die eine Kennung des Funksignals, eine Information über die Qualität des Empfangs des Funksignals (2) durch die Empfangsstation (3, GWi), ein Empfangsdatum des Funksignals (2) und eine Kennung der Empfangsstation (3, GWi) umfasst, an den Server (7) umfasst.

11. Vorrichtung zur Geopositionierung einer Signalsendevorrichtung, wobei die Signalsendevorrichtung ein Funksignal aussendet, wobei die Vorrichtung zur Geopositionierung umfasst:

a. ein Auswahlmodul zum Auswählen einer Bezugsstation (3, GWi) aus der Vielzahl von Empfangsstationen (3, GWi), die das Funksignal (2) erhalten haben,
b. ein Modul zur Definition eines Abtastbereichs (13), das dazu konfiguriert ist, einen Abtastbereich (13) in Abhängigkeit von den Positionen (Xi,Yi) der Empfangsstationen (3, GWi) zu definieren,
c. ein Modul zur Unterteilung, das dazu konfiguriert ist, den Abtastbereich (13) in eine Vielzahl von Teilbereichen (17) in Abhängigkeit von einer Granularität der Abtastung zu unterteilen,
d. ein Modul zur Berechnung eines Grades des kumulativen Fehlers, das dazu konfiguriert ist, für jeden Teilbereich (17, 25, 28) einen Grad des kumulierten Fehlers des Teilbereichs (17, 25, 28) zu berechnen, wobei die Berechnung des Grades des kumulativen Fehlers des Teilbereichs (17, 25, 28) umfasst:

- Bestimmen einer geprüften Position (k,l), die im Teilbereich (17, 25, 28) enthalten ist,
- Berechnen eines jeweiligen Übertragungsfehlerparameters ( $E_i^{k,l}$ ) für jede Empfangsstation (3, GWi) in Abhängigkeit von einem Datum des Empfangs ($T_i$) des Funksignals (2) durch die Empfangsstation (3, GWi), einem Datum des Empfangs des Funksignals (2) durch die Bezugsstation ($T_0$), einer Fortpflanzungsge-

schwindigkeit (C) des Funksignals (2), einer Entfernung ($d_i^{k,l}$) zwischen der geprüften Position (k,l) und der Empfangsstation (3, GWi) und einer Entfernung ($d_0^{k,l}$) zwischen der geprüften Position (k,l) und der Bezugsstation,
- Berechnen des Grades des kumulativen Fehlers des Teilbereichs (17, 25, 28) in Abhängigkeit von den Übertragungsfehlerparametern ($E_i^{k,l}$), die für die Gesamtheit der Empfangsstation (3, GWi) berechnet werden,

e. ein Modul zur Auswahl eines Teilbereichs, das dazu konfiguriert ist, einen Teilbereich (22, 27), der einen minimalen Grad des kumulativen Fehlers aufweist, als Teilbereich (22, 27) zur Positionierung der Signalsendevorrichtung (1) auszuwählen,

wobei das Modul zur Definition des Abtastbereichs auch dazu konfiguriert ist, einen neuen Abtastbereich (23, 26) zu definieren, wobei der neue Abtastbereich (23, 26) den durch das Modul zur Auswahl des Teilbereichs ausgewählten Teilbereich (22, 27) einschließt und auf diesen zentriert ist, wobei das Modul zur Unterteilung außerdem dazu konfiguriert ist, eine neue Abtastgranularität zu definieren, die niedriger ist als die Abtastgranularität, wobei die Vorrichtung zur Geopositionierung dazu konfiguriert ist, die Geoposition der Signalsendevorrichtung auf der Grundlage der Abtastbereiche und der Granularität, die iterativ durch das Modul zur Definition des Abtastbereichs und das Modul zur Unterteilung definiert werden, iterativ zu ermitteln und die Vorrichtung **dadurch gekennzeichnet ist, dass** bei jeder Iteration der neue Abtastbereich (23, 26) als gleich dem vom Modul zur Auswahl des Teilbereichs ausgewählten Teilbereich (22, 27) zur Positionierung definiert wird, vergrößert um einen Spielraum, der den Teilbereich (22, 27) zur Positionierung vollständig umgibt und dessen Größe größer als die Granularität der Abtastung ist.

12. Computerprogrammprodukt, umfassend Programmcodeanweisungen, die auf einem computerlesbaren Träger aufgezeichnet sind, um bei Ausführung des Programms auf der Vorrichtung nach Anspruch 11 die Schritte des Verfahrens nach einem der Ansprüche 1 bis 10 umzusetzen.

## Claims

1. A method for geolocating a signal-transmitting device, said signal-transmitting device transmitting a radio signal (2), the geolocation method comprising:

a. supplying positions of a plurality of reception stations (3, GWi) of a radio communication network and dates of reception ($T_i$) of the radio signal (2) by said reception stations (3, GWi),
b. selecting a reference station (3, GWi) from among the plurality of reception stations (3, GWi),
c. defining (14) a scanning zone (13) as a function of the positions (Xi, Yi) of said reception stations (3, GWi),
d. subdividing the scanning zone (13) into a plurality of subzones (17) as a function of a scanning granularity,
e. for each subzone (17, 25, 28), calculating a degree of cumulative error of said subzone (17, 25, 28), the calculation of the degree of cumulative error of said subzone (17, 25, 28) comprising:

  ○ determining (19) a tested position (k,l) included in said subzone (17, 25, 28),
  ○ calculating, for each reception station (3, GWi) a respective transmission error parameter ($E_i^{k,l}$) as a function of a date of reception ($T_i$) of the radio signal (2) by said reception station (3, GWi), of a date of reception of the radio signal (2) by the reference station ($T_0$), of a speed of propagation (C) of the radio signal (2), of a distance ($d_i^{k,l}$) between the tested position (k,l) and said reception station (3, GWi) and of a distance ($d_0^{k,l}$) between the tested position (k,l) and the reference station,
  ○ calculating the degree of cumulative error of the subzone (17, 25, 28) as a function of the transmission error parameters ($E_i^{k,l}$) calculated for all of the reception stations (3, GWi),

f. selecting (21) a subzone (22, 27) exhibiting a minimal degree of cumulative error as subzone (22, 27) of location of the signal-transmitting device (1),
g. defining (24) a new scanning zone (23, 26), the new scanning zone (23, 26) including and being centered on the location subzone (22, 27) selected in the step f),
h. defining (15) a new scanning granularity lower than the scanning granularity,
i. iterating the method from the step d) with the new scanning zone (23, 26) as scanning zone (23, 26) and the new granularity as granularity,

**characterized in that**, on each iteration, the new scanning zone (23, 26) is defined in the step h) as equal to the location subzone (22, 27) selected in the step f) augmented by a margin completely surrounding the location subzone (22, 27) and whose width is greater than the scanning granularity.

2. The method as claimed in claim 1, in which defining the scanning zone (14) comprises determining a maximum longitude of the reception stations (3, GWi), a minimum longitude of the reception stations (3, GWi), a maximum latitude of the reception stations (3, GWi), a minimum latitude of the reception stations (3, GWi), the scanning zone (13) being delimited by said maximum and minimum longitudes and latitudes.

3. The method as claimed in one of claims 1 and 2, comprising a number of iterations greater than 3, for example 7.

4. The method as claimed in one of claims 1 to 3, in which the step of calculation of the transmission error parameter (35) of a reception station corresponds to the formula:

$$E_i^{k,l} = \left| d_i^{k,l} - d_0^{k,l} \right| - \left| ((T_i - T_0) * C) \right|$$

in which $E_i^{k,l}$ is the error parameter of the reception station (3, GWi) at the tested position (k,l), $d_i^{k,l}$ is the distance between the tested position (k,l) and the reception station (3, GWi), $d_0^{k,l}$ is the distance between the tested position (k,l) and the reference station, $T_i$ is the date of reception of the radio signal (2) by the reception station (3, GWi), $T_0$ is the date of reception of the radio signal (2) by the reference station, and C is the speed of propagation of the radio signal (2) transmitted by the signal-transmitting device (1).

5. The method as claimed in one of claims 1 to 4, in which the degree of cumulative error of a subzone (17, 25, 28) is the sum of the transmission error parameters of the plurality of reception stations (3, GWi) for said subzone (17, 25, 28).

6. The method as claimed in one of claims 1 to 5, further comprising determining a signal quality threshold and not taking into account the radio signal received by the reception stations whose radio signal reception quality is lower than the determined signal quality threshold.

7. The method as claimed in one of claims 1 to 6, further comprising determining a threshold date of reception and not taking into account the radio signal received by the stations having a signal reception date greater than the threshold reception date.

8. The method as claimed in one of claims 1 to 7, further comprising determining that a distance between two reception stations (3, GWi) is less than a threshold difference and performing the step c) of defining the scanning zone (13) by using a common position for said two reception stations (3, GWi) having a distance less than the threshold difference.

9. The method as claimed in one of claims 1 to 8, in which the radio signal (2) transmitted by the signal-transmitting device (1) comprises a payload and a header, said header comprising an identifier and a date of transmission of said radio signal (2), the method further comprising identifying the radio signal by each reception station (3, GWi) using the identifier contained in the header of the signal.

10. The method as claimed in one of claims 1 to 9, in which the plurality of reception stations (3, GWi) are connected to a server (7), the method further comprising, for each reception station (3, GWi), transmitting to the server (7) a message (8) comprising an identifier of the radio signal, an indication of quality of reception of the radio signal (2) by the reception station (3, GWi), a date of reception of the radio signal (2), and an identifier of the reception station (3, GWi).

11. A device for geolocating a radio signal-transmitting device, said signal-transmitting device transmitting a radio signal, the geolocation device comprising:

a. a selection module for selecting a reference station (3, GWi) from among the plurality of reception stations (3, GWi) having received the radio signal (2),
b. a module for defining a scanning zone (13) configured to define a scanning zone (13) as a function of the positions (Xi, Yi) of said reception stations (3, GWi),
c. a subdivision module configured to subdivide the scanning zone (13) into a plurality of subzones (17) as a function of a scanning granularity,
d. a module for calculating a degree of cumulative error configured to, for each subzone (17, 25, 28), calculate a degree of cumulative error of said subzone (17, 25, 28), the calculation of the degree of cumulative error of said subzone (17, 25, 28) comprising:

- determining a tested position (k,l) included in said subzone (17, 25, 28),
- calculating, for each reception station (3, GWi), a respective transmission error parameter $(E_i^{k,l})$ as a function of a date of reception $(T_i)$ of the radio signal (2) by said reception station (3, GWi), of a date of reception of the radio signal (2) by the reference station $(T_0)$, of a speed of propagation (C) of the radio signal (2), of a distance $(d_i^{k,l})$ between the tested position (k,l) and said reception station (3, GWi) and of a distance $(d_0^{k,l})$ between the tested position (k,l) and the reference station,
- calculating the degree of cumulative error of the subzone (17, 25, 28) as a function of the transmission error parameters $(E_i^{k,l})$ calculated for all of the reception stations (3, GWi),

e. a subzone selection module configured to select a subzone (22, 27) exhibiting a minimum degree of cumulative error as subzone (22, 27) of location of the signal-transmitting device (1),

in which the module for defining the scanning zone is also configured to define a new scanning zone (23, 26), the new scanning zone (23, 26) including and being centered on the location subzone (22, 27) selected by the subzone selection module, the subdivision module being also configured to define a new scanning granularity lower than the scanning granularity, the geolocation device being configured to iteratively geolocate the signal-transmitting device from the scanning zones and the granularity defined iteratively by the scanning zone definition module and the subdivision module, and **characterized in that**, on each iteration, the new scanning zone (23, 26) is defined as equal to the location subzone (22, 27) selected by the subzone selection module augmented by a margin completely surrounding the location subzone (22, 27) and whose width is greater than the scanning granularity.

12. A computer program product comprising program code instructions stored on a computer-readable medium for implementing the steps of the method as claimed in one of claims 1 to 10 when said program runs on the device of claim 11.

FIG. 1

GW4 : $(X_4, Y_4)$

GW1 : $(X_1, Y_1)$

GW2 : $(X_2, Y_2)$

GW3 : $(X_3, Y_3)$

FIG. 2

$(X_4, Y_3)$

$(X_2, Y_1)$

FIG. 3

| | |
|---|---|
| Sélection station de référence | — 11 |

Définition de la zone de balayage — 12

| En fonction des positions des stations | En fonction de la position estimée — 24 |
|---|---|

14 —

| | |
|---|---|
| Définition granularité de balayage | — 15 |

| | |
|---|---|
| Subdivision de la zone de balayage | — 16 |

Balayage — 18

**Zone 1** — 19

Définition position à tester

Calcul erreur $E_1$

Calcul erreur $E_N$ — 20

Calcul erreur cumulée zone 1 — 35

**Zone (X*Y)** — 19

Définition position à tester

Calcul erreur $E_1$

Calcul erreur $E_N$ — 20

Calcul erreur cumulée zone (X*Y) — 35

| | |
|---|---|
| Estimation position de l'émetteur (minimisation de l'erreur cumulée zones 1 à (X*Y)) | — 21 |

# FIG. 4

| 29 | Filtration par puissance de signal |
| 30 | Filtration par l'écart de temps d'arrivée entre deux antennes d'une même station |
| 31 | Filtration par distance entre les stations |

Pré-traitement

| | Détermination de la position de l'émetteur en fonction de la position des stations et des temps de réception du signal desdites stations |
| 32 | Ajustement en fonction du rapport entre les distances estimées et le rapport signal sur bruit pour chaque station |
| 33 | Filtration par distance entre la position estimée et la station de référence |
| 34 | Lissage des résultats |

Post-traitement

FIG. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5058200 A
- US 2003146871 A1
- US 20100138184 A1